# EUROPEAN PATENT APPLICATION

(11) **EP 4 541 855 A1**
(43) Date of publication of application: **23.04.2025**
(21) Application number: 23823962.8
(22) Date of filing: 14.06.2023
(51) Int. Cl.: C08L 77/00, B32B 27/34, B65D 65/40, C08J 5/18, C08K 5/00, C08L 23/00, C08L 23/26, C08L 33/02

(54) **POLYAMIDE RESIN COMPOSITION, AND FILM AND FILM LAMINATE INCLUDING SAME**

(30) Priority: 14.06.2022 JP 2022095418
(71) Applicant: UBE Corporation, Ube-shi, Yamaguchi 755-8633 (JP)
(72) Inventor: YAMASHITA Atsushi, Ube-shi, Yamaguchi 755-8633 (JP); ONO Keitarou, Ube-shi, Yamaguchi 755-8633 (JP); NAKAMOTO Shogo, Ube-shi, Yamaguchi 755-8633 (JP)
(74) Representative: Hoffmann Eitle
(86) International application number: PCT/JP2023/022141
(87) International publication number: WO 2023/243672

(57) **Abstract**

The present invention provides a polyamide resin composition that can form a film with no visual defects from film gels, excellent transparency, and excellent anti-pinhole properties in low-temperature environments. The present invention also provides a film and a film laminate that utilize the polyamide resin composition. The polyamide resin composition comprises, in terms of 100 mass% of the polyamide resin composition: 90.0 to 98.0 mass% of a polyamide resin (A); 0.1 to 2.0 mass% of a functional-group-containing copolymer polyolefin resin (B); 0.1 to 2.0 mass% of a non-functional-group-containing copolymer polyolefin resin (C); 0.1 to 2.0 mass% of an ethylene/(meth)acrylic acid copolymer metallic salt (D); and 4.0 mass% or less of another component (E). The functional-group-containing copolymer polyolefin resin (B) has a melt flow rate (MFR) of 10 to 50 g/10 min as measured according to ASTM D1238 at a temperature of 190°C and a load of 2.16 kg.

## Description

### TECHNICAL FIELD

The present invention relates to a polyamide resin composition, and a film and a film laminate each comprising the same.

### BACKGROUND ART

A film formed from a polyamide resin composition (hereinafter, frequently referred to as "polyamide film") has excellent properties, such as gas barrier properties, toughness, pinhole resistance, heat resistance, and transparency. Therefore, a polyamide film is used in a wide variety of fields. As an example of the use, the polyamide film is used as a packaging member for, for example, foods and medicines.

Among the polyamide films used as a food packaging member, the polyamide film used for, for example, frozen food, which is stored in a low temperature environment, is required to have excellent pinhole resistance in a low temperature environment. Meanwhile, there is a case where, when forming the polyamide film, a polymer deterioration product (hereinafter, frequently referred to as "film gel") is generated. The film gel generated causes the polyamide film to have poor appearance, and therefore there are demands for the polyamide film having reduced the amount of the film gel contained therein. In the food packaging application, excellent appearance of the film is particularly required, and therefore a material having as small an amount of the generated film gel as possible is needed.

Patent Literature 1 discloses a polyamide multilayer film having at least one ethylene-vinyl acetate copolymer saponification product layer as a barrier layer and at least one polyamide layer, and the working Examples of the Patent Literature disclose a multilayer film comprising a polyamide layer containing 6-nylon, a modified ethylenevinyl acetate copolymer, an ethylene/methacrylic acid copolymer ionomer, an antioxidant, and aromatic nylon in a predetermined ratio. The Patent Literature shows that the multilayer film can be subjected to boiling treatment or retort treatment without suffering whitening of the film, and further has excellent mechanical strength, pinhole resistance, and gas barrier properties.

Patent Literature 2 discloses a film having, on at least one surface of a biaxially stretched polyamide film containing 2 to 5% by mass of an ethylene copolymer, a resin layer containing a vinylidene chloride copolymer, and discloses that when the film is subjected to 1,000-time repeated flexing fatigue test in an atmosphere at 5°C, the number of pinholes in the film is 10 or less. As examples of the ethylene copolymers, there are shown an ethylene-acrylate-maleic anhydride terpolymer, an ethylene-(meth)acrylic acid copolymer, and ionomers thereof. Patent Literature 2 shows that the polyamide film has excellent gas barrier properties and pinhole resistance.

Patent Literature 3 discloses a polyamide resin composition comprising a polyamide resin, an ethylene-ethyl acrylate copolymer, an antioxidant, and an ionomer resin in a predetermined ratio, and shows that the polyamide resin composition has excellent thermal durability when subjected to heat sterilization. Further, Patent Literature 4 discloses a polyamide resin blend comprising a masterbatch (A) and a polyamide resin (B) in a predetermined ratio, wherein the masterbatch (A) is obtained by melt-mixing a polyamide resin and a soft polymer selected from, for example, a modified ethylene-α-olefin copolymer and a metal ion-containing ethylene copolymer. The Patent Literature shows that the polyamide resin blend has excellent pinhole resistance and transparency, and is unlikely to cause fish-eye.

### CITATION LIST

### Patent Literature

Patent Literature 1: WO 2004/113071 A1
Patent Literature 2: JP 2014-014976 A
Patent Literature 3: WO 2017/073559 A1
Patent Literature 4: JP 2000-109685 A

### SUMMARY OF INVENTION

### Technical Problem

However, the polyamide multilayer films in Patent Literatures 1 and 2 have a certain effect for pinhole resistance, but has poor appearance due to a film gel generated when forming the film, and thus must be further improved in the appearance. Similarly, the polyamide films formed from the compositions in Patent Literatures 3 and 4 are needed to be improved in respect of the appearance.

An object of the present invention is to provide a polyamide resin composition advantageous in that a film which does not have poor appearance due to a film gel and which has excellent transparency and excellent pinhole resistance in a low temperature environment can be formed from the composition, and a film and a film laminate each using the composition.

### Solution to Problem

The present invention is directed to the following items [1] to [16].
[1] A polyamide resin composition comprising a polyamide resin (A) in an amount of 90.0 to 98.0% by mass, a functional group-containing copolymer polyolefin resin (B) in an amount of 0.1 to 2.0% by mass, a functional group-non-containing copolymer polyolefin resin (C) in an amount of 0.1 to 2.0% by mass, an ethylene/(meth)acrylic acid copolymer metal salt (D) in an amount of 0.1 to 2.0% by mass, and an additional component (E) in an amount of 4.0% by mass or less, based on 100 mass% of the polyamide resin composition, wherein the functional group-containing copolymer polyolefin resin (B) has an MFR of 10 to 50 g/10 minutes, as measured at a temperature of 190°C and under a load of 2.16 kg in accordance with ASTM D1238.
[2] The polyamide resin composition according to item [1] above, wherein the polyamide resin (A) is selected from the group consisting of polyamide 6, polyamide 56, polyamide 510, polyamide 512, polyamide 610, polyamide 612, polyamide 1010, polyamide 1012, polyamide 6/66, polyamide 6/12, and polyamide 6/66/12.
[3] The polyamide resin composition according to item [1] or [2] above, wherein the functional group-containing copolymer polyolefin resin (B) is an ethylene/α-olefin copolymer having bonded thereto a group derived from maleic anhydride.
[4] The polyamide resin composition according to any one of items [1] to [3] above, wherein the functional group-non-containing copolymer polyolefin resin (C) is an ethylene/α-olefin copolymer, wherein the α-olefin of the ethylene/α-olefin copolymer is at least one member selected from the group consisting of propylene, 1-butene, 1-hexene, and 1-octene.
[5] The polyamide resin composition according to any one of items [1] to [4] above, wherein the functional group-non-containing copolymer polyolefin resin (C) is an ethylene/1-butene copolymer.
[6] The polyamide resin composition according to any one of items [1] to [5] above, wherein the metal used in the ethylene/(meth)acrylic acid copolymer metal salt (D) is at least one member selected from the group consisting of Na, K, Cu, Mg, Ca, Ba, Zn, Cd, Al, Fe, Co, and Ni.
[7] The polyamide resin composition according to any one of items [1] to [6] above, wherein the ethylene/(meth)acrylic acid copolymer metal salt (D) is a partial zinc salt of the ethylene/(meth)acrylic acid copolymer.
[8] The polyamide resin composition according to any one of items [1] to [7] above, wherein the mass ratio (C/B) of the functional group-non-containing copolymer polyolefin resin (C) to the functional group-containing copolymer polyolefin resin (B) is 0.9 to 3.2.
[9] The polyamide resin composition according to any one of items [1] to [8] above, wherein the mass ratio (C/D) of the functional group-non-containing copolymer polyolefin resin (C) to the ethylene/(meth)acrylic acid copolymer metal salt (D) is 1.7 to 8.0.
[10] The polyamide resin composition according to any one of items [1] to [9] above, wherein the additional component (E) comprises an anti-blocking agent, wherein the amount of the anti-blocking agent contained is 0.01 to 1.0% by mass, based on 100 mass% of the polyamide resin composition.
[11] The polyamide resin composition according to any one of items [1] to [10] above, wherein the additional component (E) comprises at least one antioxidant selected from the group consisting of a phenolic compound, a phosphorus compound, and a sulfur compound, wherein the amount of the antioxidant contained is 0.01 to 1.0% by mass, based on 100 mass% of the polyamide resin composition.
[12] The polyamide resin composition according to any one of items [1] to [11] above, wherein the additional component (E) comprises a lubricant, wherein the amount of the lubricant contained is 0.01 to 1.0% by mass, based on 100 mass% of the polyamide resin composition.
[13] A polyamide film comprising the polyamide resin composition according to any one of items [1] to [12] above.
[14] The polyamide film according to item [13] above, which is a stretched film.
[15] A film laminate comprising the polyamide film according to item [13] or [14] above.
[16] The film laminate according to item [15] above, which is for use in food packaging.

### Advantageous Effects of Invention

By the present invention, there can be provided a polyamide resin composition advantageous in that a film which does not have poor appearance due to a film gel and which has excellent transparency and excellent pinhole resistance in a low temperature environment can be formed from the composition, and a film and a film laminate each using the composition.

### DESCRIPTION OF EMBODIMENTS

In the present specification, with respect to the amount of the component contained in the composition, when two or more substances corresponding to the component of the composition are present, the amount of the component means a total amount of the two or more substances present in the composition unless otherwise specified. In the present specification, the term "polyamide resin composition" means a composition comprising at least a polyamide resin, and includes the composition in any form, such as the form of pellets, a sheet, a strand, a chip, or a molded article molded by various methods. Hereinbelow, the polyamide resin composition of the present invention will be described in detail.

The polyamide resin composition of the present invention comprises a polyamide resin (A) in an amount of 90.0 to 98.0% by mass, a functional group-containing copolymer polyolefin resin (B) in an amount of 0.1 to 2.0% by mass, a functional group-non-containing copolymer polyolefin resin (C) in an amount of 0.1 to 2.0% by mass, a metal salt (D) of an ethylene/(meth)acrylic acid copolymer in an amount of 0.1 to 2.0% by mass, and an additional component (E) in an amount of 4.0% by mass or less, based on 100 mass% of the polyamide resin composition, wherein the functional group-containing copolymer polyolefin resin (B) has an MFR of 10 to 50 g/10 minutes, as measured at a temperature of 190°C and under a load of 2.16 kg in accordance with ASTM D1238. The amounts of components (A) to (E) contained and the MFR of component (B) are in the above-mentioned respective ranges, and therefore the polyamide resin composition has an advantageous feature such that a film which does not have poor appearance due to a film gel and which has excellent transparency and excellent pinhole resistance in a low temperature environment can be formed from the composition. In the present specification, the term "ethylene/(meth)acrylic acid copolymer" means an ethylene/acrylic acid copolymer or an ethylene/methacrylic acid copolymer.

### [Polyamide resin composition]

### <Polyamide resin (A)>

With respect to a polyamide resin (A), there is no particular limitation, and, for example, there can be mentioned an aliphatic polyamide homopolymer and a copolymer using two or more raw material monomers forming the polyamide. Examples of raw material monomers forming the aliphatic polyamide include a lactam, an aminocarboxylic acid which is a hydrolysate of the lactam, and a combination of an aliphatic diamine and an aliphatic dicarboxylic acid. When the monomer component constituting the aliphatic polyamide is a combination of an aliphatic diamine and an aliphatic dicarboxylic acid, a combination of one type of an aliphatic diamine and one type of an aliphatic dicarboxylic acid is regarded as one type of a raw material monomer.

With respect to the aliphatic polyamide homopolymer and the copolymer using two or more raw material monomers forming the polyamide, specific examples of such homopolymers and copolymers include polycaproamide (polyamide 6), polyundecanamide (polyamide 11), polydodecanamide (polyamide 12), polyethylene adipamide (polyamide 26), polytetramethylene succinamide (polyamide 44), polytetramethylene glutamide (polyamide 45), polytetramethylene adipamide (polyamide 46), polytetramethylene suberamide (polyamide 48), polytetramethylene azelamide (polyamide 49), polytetramethylene sebacamide (polyamide 410), polytetramethylene dodecanamide (polyamide 412), polypentamethylene succinamide (polyamide 54), polypentamethylene glutamide (polyamide 55), polypentamethylene adipamide (polyamide 56), polypentamethylene suberamide (polyamide 58), polypentamethylene azelamide (polyamide 59), polypentamethylene sebacamide (polyamide 510), polypentamethylene dodecanamide (polyamide 512), polyhexamethylene succinamide (polyamide 64), polyhexamethylene glutamide (polyamide 65), polyhexamethylene adipamide (polyamide 66), polyhexamethylene suberamide (polyamide 68), polyhexamethylene azelamide (polyamide 69), polyhexamethylene sebacamide (polyamide 610), polyhexamethylene dodecanamide (polyamide 612), polyhexamethylene tetradecanamide (polyamide 614), polyhexamethylene hexadecanamide (polyamide 616), polyhexamethylene octadecanamide (polyamide 618), polynonamethylene adipamide (polyamide 96), polynonamethylene suberamide (polyamide 98), polynonamethylene azelamide (polyamide 99), polynonamethylene sebacamide (polyamide 910), polynonamethylene dodecanamide (polyamide 912), polydecamethylene adipamide (polyamide 106), polydecamethylene suberamide (polyamide 108), polydecamethylene azelamide (polyamide 109), polydecamethylene sebacamide (polyamide 1010), polydecamethylene dodecanamide (polyamide 1012), polydodecamethylene adipamide (polyamide 126), polydodecamethylene suberamide (polyamide 128), polydodecamethylene azelamide (polyamide 129), polydodecamethylene sebacamide (polyamide 1210), polydodecamethylene dodecanamide (polyamide 1212), and copolymers using two or more raw material monomers for the above polyamide.

With respect to the polyamide resin other than the aliphatic polyamide, a polyamide resin having an alicyclic group or an aromatic group in the principal chain or side chain thereof can be used. Examples of polyamide resins other than the aliphatic polyamide include polymetaxylylene adipamide (polyamide MXD6), polymetaxylylene suberamide (polyamide MXD8), polymetaxylylene azelamide (polyamide MXD9), polymetaxylylene sebacamide (polyamide MXD10), polymetaxylylene dodecanamide (polyamide MXD12), polymetaxylylene terephthalamide (polyamide MXDT), polymetaxylylene isophthalamide (polyamide MXDI), polymetaxylylene hexahydroterephthalamide (polyamide MXDT(H)), polymetaxylylene naphthalamide (polyamide MXDN), polyparaxylylene adipamide (polyamide PXD6), polyparaxylylene suberamide (polyamide PXD8), polyparaxylylene azelamide (polyamide PXD9), polyparaxylylene sebacamide (polyamide PXD10), polyparaxylylene dodecanamide (polyamide PXD12), polyparaxylylene terephthalamide (polyamide PXDT), polyparaxylylene isophthalamide (polyamide PXDI), polyparaxylylene hexahydroterephthalamide (polyamide PXDT(H)), polyparaxylylene naphthalamide (polyamide PXDN), polyparaphenylene terephthalamide (PPTA), polyparaphenylene isophthalamide (PPIA), polymetaphenylene terephthalamide (PMTA), polymetaphenylene isophthalamide (PMIA), poly(2,6-naphthalenedimethylene adipamide) (polyamide 2,6-BAN6), poly(2,6-naphthalenedimethylene suberamide) (polyamide 2,6-BAN8), poly(2,6-naphthalenedimethylene azelamide) (polyamide 2,6-BAN9), poly(2,6-naphthalenedimethylene sebacamide) (polyamide 2,6-BAN10), poly(2,6-naphthalenedimethylene dodecanamide) (polyamide 2,6-BAN12), poly(2,6-naphthalenedimethylene terephthalamide) (polyamide 2,6-BANT), poly(2,6-naphthalenedimethylene isophthalamide) (polyamide 2,6-BANI), poly(2,6-naphthalenedimethylene hexahydroterephthalamide) (polyamide 2,6-BANT(H)), poly(2,6-naphthalenedimethylene naphthalamide) (polyamide 2,6-BANN), poly(1,3-cyclohexanedimethylene adipamide) (polyamide 1,3-BAC6), poly(1,3-cyclohexanedimethylene suberamide (polyamide 1,3-BAC8), poly(1,3-cyclohexanedimethylene azelamide) (polyamide 1,3-BAC9), poly(1,3-cyclohexanedimethylene sebacamide) (polyamide 1,3-BAC10), poly(1,3-cyclohexanedimethylene dodecanamide) (polyamide 1,3-BAC12), poly(1,3-cyclohexanedimethylene terephthalamide) (polyamide 1,3-BACT), poly(1,3-cyclohexanedimethylene isophthalamide) (polyamide 1,3-BACI), poly(1,3-cyclohexanedimethylene hexahydroterephthalamide) (polyamide 1,3-BACT(H)), poly(1,3-cyclohexanedimethylene naphthalamide) (polyamide 1,3-BACN), poly(1,4-cyclohexanedimethylene adipamide) (polyamide 1,4-BAC6), poly(1,4-cyclohexanedimethylene suberamide) (polyamide 1,4-BAC8), poly(1,4-cyclohexanedimethylene azelamide) (polyamide 1,4-BAC9), poly(1,4-cyclohexanedimethylene sebacamide) (polyamide 1,4-BAC10), poly(1,4-cyclohexanedimethylene dodecanamide) (polyamide 1,4-BAC12), poly(1,4-cyclohexanedimethylene terephthalamide) (polyamide 1,4-BACT), poly(1,4-cyclohexanedimethylene isophthalamide) (polyamide 1,4-BACI), poly(1,4-cyclohexanedimethylene hexahydroterephthalamide) (polyamide 1,4-BACT(H)), poly(1,4-cyclohexanedimethylene naphthalamide) (polyamide 1,4-BACN), poly(4,4'-methylenebiscyclohexylene adipamide) (polyamide PACM6), poly(4,4'-methylenebiscyclohexylene suberamide) (polyamide PACM8), poly(4,4'-methylenebiscyclohexylene azelamide) (polyamide PACM9), poly(4,4'-methylenebiscyclohexylene sebacamide) (polyamide PACM10), poly(4,4'-methylenebiscyclohexylene dodecanamide) (polyamide PACM12), poly(4,4'-methylenebiscyclohexylene tetradecanamide) (polyamide PACM14), poly(4,4'-methylenebiscyclohexylene hexadecanamide) (polyamide PACM16), poly(4,4'-methylenebiscyclohexylene octadecanamide) (polyamide PACM18), poly(4,4'-methylenebiscyclohexylene terephthalamide) (polyamide PACMT), poly(4,4'-methylenebiscyclohexylene isophthalamide) (polyamide PACMI), poly(4,4'-methylenebiscyclohexylene hexahydroterephthalamide) (polyamide PACMT(H)), poly(4,4'-methylenebiscyclohexylene naphthalamide) (polyamide PACMN), poly(4,4'-methylenebis(2-methyl-cyclohexylene) adipamide) (polyamide MACM6), poly(4,4'-methylenebis(2-methyl-cyclohexylene) suberamide) (polyamide MACM8), poly(4,4'-methylenebis(2-methyl-cyclohexylene) azelamide) (polyamide MACM9), poly(4,4'-methylenebis(2-methyl-cyclohexylene) sebacamide) (polyamide MACM10), poly(4,4'-methylenebis(2-methyl-cyclohexylene) dodecanamide) (polyamide MACM12), poly(4,4'-methylenebis(2-methyl-cyclohexylene) tetradecanamide) (polyamide MACM14), poly(4,4'-methylenebis(2-methyl-cyclohexylene) hexadecanamide) (polyamide MACM16), poly(4,4'-methylenebis(2-methyl-cyclohexylene) octadecanamide) (polyamide MACM18), poly(4,4'-methylenebis(2-methyl-cyclohexylene) terephthalamide) (polyamide MACMT), poly(4,4'-methylenebis(2-methyl-cyclohexylene) isophthalamide) (polyamide MACMI), poly(4,4'-methylenebis(2-methyl-cyclohexylene) hexahydroterephthalamide) (polyamide MACMT(H)), poly(4,4'-methylenebis(2-methyl-cyclohexylene) naphthalamide) (polyamide MACMN), poly(4,4'-propylenebiscyclohexylene adipamide) (polyamide PACP6), poly(4,4'-propylenebiscyclohexylene suberamide) (polyamide PACP8), poly(4,4'-propylenebiscyclohexylene azelamide) (polyamide PACP9), poly(4,4'-propylenebiscyclohexylene sebacamide) (polyamide PACP10), poly(4,4'-propylenebiscyclohexylene dodecanamide) (polyamide PACP12), poly(4,4'-propylenebiscyclohexylene tetradecanamide) (polyamide PACP14), poly(4,4'-propylenebiscyclohexylene hexadecanamide) (polyamide PACP16), poly(4,4'-propylenebiscyclohexylene octadecanamide) (polyamide PACP18), poly(4,4'-propylenebiscyclohexylene terephthalamide) (polyamide PACPT), poly(4,4'-propylenebiscyclohexylene isophthalamide) (polyamide PACPI), poly(4,4'-propylenebiscyclohexylene hexahydroterephthalamide) (polyamide PACPT(H)), poly(4,4'-propylenebiscyclohexylene naphthalamide) (polyamide PACPN), polyisophorone adipamide (polyamide IPD6), polyisophorone suberamide (polyamide IPD8), polyisophorone azelamide (polyamide IPD9), polyisophorone sebacamide (polyamide IPD10), polyisophorone dodecanamide (polyamide IPD12), polyisophorone terephthalamide (polyamide IPDT), polyisophorone isophthalamide (polyamide IPDI), polyisophorone hexahydroterephthalamide (polyamide IPDT(H)), polyisophorone naphthalamide (polyamide IPDN), polytetramethylene terephthalamide (polyamide 4T), polytetramethylene isophthalamide (polyamide 4I), polytetramethylene hexahydroterephthalamide (polyamide 4T(H)), polytetramethylene naphthalamide (polyamide 4N), polypentamethylene terephthalamide (polyamide 5T), polypentamethylene isophthalamide (polyamide 5I), polypentamethylene hexahydroterephthalamide (polyamide 5T(H)), polypentamethylene naphthalamide (polyamide 5N), polyhexamethylene terephthalamide (polyamide 6T), polyhexamethylene isophthalamide (polyamide 6I), polyhexamethylene hexahydroterephthalamide (polyamide 6T(H)), polyhexamethylene naphthalamide (polyamide 6N), poly(2-methylpentamethylene terephthalamide) (polyamide M5T), poly(2-methylpentamethylene isophthalamide) (polyamide M5I), poly(2-methylpentamethylene hexahydroterephthalamide) (polyamide M5T(H)), poly(2-methylpentamethylene naphthalamide (polyamide M5N), polynonamethylene terephthalamide (polyamide 9T), polynonamethylene isophthalamide (polyamide 9I), polynonamethylene hexahydroterephthalamide (polyamide 9T(H)), polynonamethylene naphthalamide (polyamide 9N), poly(2-methyloctamethylene terephthalamide) (polyamide M8T), poly(2-methyloctamethylene isophthalamide) (polyamide M8I), poly(2-methyloctamethylene hexahydroterephthalamide) (polyamide M8T(H)), poly(2-methyloctamethylene naphthalamide) (polyamide M8N), polytrimethylhexamethylene terephthalamide (polyamide TMHT), polytrimethylhexamethylene isophthalamide (polyamide TMHI), polytrimethylhexamethylene hexahydroterephthalamide (polyamide TMHT(H)), polytrimethylhexamethylene naphthalamide (polyamide TMHN), polydecamethylene terephthalamide (polyamide 10T), polydecamethylene isophthalamide (polyamide 10I), polydecamethylene hexahydroterephthalamide (polyamide 10T(H)), polydecamethylene naphthalamide (polyamide 10N), polyundecamethylene terephthalamide (polyamide 11T), polyundecamethylene isophthalamide (polyamide 111), polyundecamethylene hexahydroterephthalamide (polyamide 11T(H)), polyundecamethylene naphthalamide (polyamide 11N), polydodecamethylene terephthalamide (polyamide 12T), polydodecamethylene isophthalamide (polyamide 12I), polydodecamethylene hexahydroterephthalamide (polyamide 12T(H)), polydodecamethylene naphthalamide (polyamide 12N), and copolymers using two or more raw material monomers for the above polyamide.

The polyamide resin (A) may be a single resin or a combination of two or more resins.

Among the polyamide resins, from the viewpoint of, for example, the heat resistance, mechanical strength, and transparency of the obtained article formed from the composition and easy availability and from an economical point of view, at least one homopolymer selected from the group consisting of polycaproamide (polyamide 6), polyundecanamide (polyamide 11), polydodecanamide (polyamide 12), polypentamethylene adipamide (polyamide 56), polypentamethylene sebacamide (polyamide 510), polypentamethylene dodecanamide (polyamide 512), polyhexamethylene adipamide (polyamide 66), polyhexamethylene sebacamide (polyamide 610), polyhexamethylene dodecanamide (polyamide 612), polydecamethylene sebacamide (polyamide 1010), polydecamethylene dodecanamide (polyamide 1012), and polydodecamethylene dodecanamide (polyamide 1212), and/or a copolymer using two or more raw material monomers forming the above polyamide is preferably used; at least one member selected from the group consisting of polyamide 6, polyamide 56, polyamide 510, polyamide 512, polyamide 610, polyamide 612, polyamide 1010, polyamide 1012, a copolymer of polyamide 6 and polyamide 66 (polyamide 6/66), a copolymer of polyamide 6 and polyamide 12 (polyamide 6/12), and a copolymer of polyamide 6, polyamide 66, and polyamide 12 (polyamide 6/66/12) is preferably used; at least one member selected from the group consisting of polyamide 6, a copolymer of polyamide 6 and polyamide 66 (polyamide 6/66), a copolymer of polyamide 6 and polyamide 12 (polyamide 6/12), and a copolymer of polyamide 6, polyamide 66, and polyamide 12 (polyamide 6/66/12) is more preferably used; and at least one member selected from the group consisting of polyamide 6 and a copolymer of polyamide 6 and polyamide 66 (polyamide 6/66) is especially preferably used.

From the viewpoint of the forming processability, the polyamide resin (A) preferably has a relative viscosity of 2.0 to 4.5, more preferably 2.5 to 4.5, further preferably 3.0 to 4.5, and especially preferably 3.2 to 4.3. When the relative viscosity of the polyamide resin (A) is smaller than 2.0, it is likely that the obtained polyamide film has a low mechanical strength. On the other hand, when the relative viscosity of the polyamide resin (A) is larger than 4.5, it is likely that the composition being molten has an increased viscosity, making it difficult to form a film.

The relative viscosity of the polyamide resin (A) is a value measured at 25°C with respect to 1 g of the polyamide resin (A) dissolved in 100 ml of 96% sulfuric acid in accordance with JIS K 6920. When the polyamide resin (A) is a combination of two or more polyamide resins, it is preferred that the relative viscosity of the polyamide resin (A) is measured in accordance with the above-mentioned method, but, when the relative viscosities of the individual polyamide resins and the ratios of the polyamide resins mixed are known, an average calculated from a total of values obtained by multiplying the relative viscosities by the respective ratios can be used as a relative viscosity of the polyamide resin (A).

The amount of the contained polyamide resin (A) is 90.0 to 98.0% by mass, based on 100 mass% of the polyamide resin composition. The amount of the contained polyamide resin (A) is in the above-mentioned range, and therefore the polyamide resin composition exhibits excellent compatibility of the polyamide resin (A) with a functional group-containing copolymer polyolefin resin (B), a functional group-non-containing copolymer polyolefin resin (C), and an ethylene/(meth)acrylic acid copolymer metal salt (D), so that the melt stability of the polyamide resin composition and formability of a film are improved. Further, a polyamide film formed from the polyamide resin composition is prevented from having poor appearance due to a film gel, making it possible to maintain transparency of the film and excellent pinhole resistance. The amount of the contained polyamide resin (A) is preferably 93.0% by mass or more, more preferably 96.0% by mass or more, and especially preferably 97.0% by mass or more, based on 100 mass% of the polyamide resin composition. Further, the amount of the contained polyamide resin (A) is preferably 97.8% by mass or less, and more preferably 97.6% by mass or less, based on 100 mass% of the polyamide resin composition.

Examples of apparatuses for producing the polyamide resin include known apparatuses for producing a polyamide, such as a batch reactor, a single-tank or multi-tank continuous reaction apparatus, a tubular continuous reaction apparatus, and kneading reaction extruders, e.g., a single-screw kneading extruder and a twin-screw kneading extruder. Using a known method, such as melt polymerization, solution polymerization, or solid-phase polymerization, as a polymerization method, polymerization can be made by repeating an operation under atmospheric pressure and an operation of reducing or increasing the pressure. These polymerization methods can be used individually or appropriately in combination.

### <Functional group-containing copolymer polyolefin resin (B)>

A functional group-containing copolymer polyolefin resin (B) is a component which imparts mechanical strength and impact resistance to the polyamide resin composition, and which improves the transparency of a film formed from the polyamide resin composition. The functional group-containing copolymer polyolefin resin (B) has in the molecule thereof a functional group having affinity with the polyamide resin (A), and therefore, when a film is formed from the polyamide resin composition, the film has an improved impact resistance and pinhole resistance as well as improved transparency and excellent appearance due to a reaction of the amino group of the polyamide resin and the functional group of the functional group-containing copolymer polyolefin resin.

The functional group-containing copolymer polyolefin resin (B) has a melt flow rate (MFR) of 10 to 50 g/10 minutes, as measured at a temperature of 190°C and under a load of 2.16 kg in accordance with ASTM D1238. The MFR of the functional group-containing copolymer polyolefin resin (B) is in the above-mentioned range, and therefore the polyamide resin composition has an advantageous feature such that a film which does not have poor appearance due to a film gel and which has excellent pinhole resistance in a low temperature environment can be formed from the composition. The MFR of the functional group-containing copolymer polyolefin resin (B) is in the above-mentioned range, and therefore the compatibility of the component (B) with the polyamide resin (A) is satisfactory, so that the obtained film not only has excellent pinhole resistance but also can be prevented from having poor appearance due to a film gel. The MFR of the functional group-containing copolymer polyolefin resin (B) is preferably 20 to 50 g/10 minutes, more preferably 25 to 45 g/10 minutes, and especially preferably 30 to 45 g/10 minutes.

Examples of functional groups of the functional group-containing copolymer polyolefin resin (B) include a carboxyl group, an acid anhydride group, a carboxylate group, a carboxylic acid metal salt, a carboxylic acid imide group, a carboxylic acid amide group, and an epoxy group. It is considered that the amino group of the polyamide resin (A) and at least part of the above functional group are reacted with each other.

As examples of the method for introducing the above functional group into the copolymer polyolefin resin, there can be mentioned (i) a method in which a copolymerizable monomer having the functional group is copolymerized during the polymerization of the copolymer polyolefin resin, (ii) a method in which the functional group is introduced into the molecular chain or molecular end of the copolymer polyolefin resin using, for example, a polymerization initiator or a chain transfer agent, and (iii) a method in which a compound having the functional group and a functional group capable of grafting (a graft compound) is grafted on the copolymer polyolefin resin. These methods for introducing the functional group can be used individually or appropriately in combination. Especially, from the viewpoint of preventing a film formed from the polyamide resin composition from having poor appearance due to a film gel to maintain transparency of the film and excellent pinhole resistance, it is preferred that the functional group-containing copolymer polyolefin resin (B) is produced by method (ii) or (iii) above.

Examples of copolymerizable monomers having the functional group and the graft compounds include acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endobicyclo-[2.2.1]-5-heptene-2,3-dicarboxylic acid, and metal salts of the above carboxylic acid, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endobicyclo-[2.2.1]-5-heptene-2,3-dicarboxylic anhydride, maleimide, N-ethylmaleimide, N-butylmaleimide, N-phenylmaleimide, acrylamide, methacrylamide, glycidyl acrylate, glycidyl methacrylate, glycidyl ethacrylate, glycidyl itaconate, and glycidyl citraconate. These compounds can be used individually or in combination. Of these, maleic anhydride, itaconic anhydride, and citraconic anhydride are preferred, and maleic anhydride is further preferred.

The amount of the functional group contained in the functional group-containing copolymer polyolefin resin (B), in terms of the molar number (µmol) of the functional group/the mass (g) of the component (B), is preferably more than 25 to less than 150 µmol/g, more preferably 35 to less than 125 µmol, and especially preferably 40 to 110 µmol/g. For example, when the functional group-containing copolymer polyolefin resin (B) has a carboxyl group, an acid anhydride group, or a carboxylate group, the amount of the functional group contained in the functional group-containing copolymer polyolefin resin (B) is measured by neutralization titration using a 0.1 N ethanol solution of KOH, and using phenolphthalein as an indicator with respect to a sample solution prepared using toluene and ethanol.

Examples of the functional group-containing copolymer polyolefin resins (B) include an (ethylene and/or propylene)/α-olefin copolymer containing the above-mentioned functional group, and an (ethylene and/or propylene)/(α,β-unsaturated carboxylic acid and/or α,β-unsaturated carboxylate) copolymer. In these copolymers, the content of ethylene and/or propylene units is preferably 10 to 90 mol%, and more preferably 20 to 80 mol%.

With respect to the functional group-containing copolymer polyolefin resin (B), the resins can be used individually or in combination. With respect to the functional group-containing copolymer polyolefin resin (B), an ethylene/α-olefin copolymer containing the above-mentioned functional group is preferred.

The (ethylene and/or propylene)/α-olefin copolymer is a polymer obtained by copolymerizing ethylene and an α-olefin having 3 or more carbon atoms and/or a polymer obtained by copolymerizing propylene and an α-olefin having 4 or more carbon atoms.

Examples of α-olefins having 3 or more carbon atoms include propylene, 1-butene, 1-pentene, 1-hexene, 1-heptene, 1-octene, 1-nonene, 1-decene, I-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. These olefins may be used individually or in combination. Of these, the (ethylene and/or propylene)/α-olefin copolymer is preferably an ethylene/α-olefin copolymer, and especially preferably an ethylene/1-butene copolymer.

Alternatively, the copolymer may be one which is obtained by copolymerizing a polyene, such as a non-conjugated diene. Examples of non-conjugated dienes include 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, cyclooctadiene, 5-vinylnorbornene, 5-ethylidene-2-norbornene, 5-methylene-2-norbornene, 5-isopropylidene-2-norbornene, 6-chloromethyl-5-isopropylidene-2-norbornene, 2,3-diisopropylidene-5-norbornene, 2-ethylidene-3-isopropylidene-5-norbornene, and 2-propenyl-2,5-norbornadiene. These may be used individually or in combination.

The (ethylene and/or propylene)/(α,β-unsaturated carboxylic acid and/or α,β-unsaturated carboxylate) copolymer is a polymer obtained by copolymerizing ethylene and/or propylene and an α,β-unsaturated carboxylic acid and/or α,β-unsaturated carboxylate monomer. Examples of α,β-unsaturated carboxylic acid monomers include acrylic acid and methacrylic acid. Examples of α,β-unsaturated carboxylate monomers include a methyl ester, an ethyl ester, a propyl ester, a butyl ester, a pentyl ester, a hexyl ester, a heptyl ester, an octyl ester, a nonyl ester, and a decyl ester of the above α,β-unsaturated carboxylic acid. These monomers may be used individually or in combination.

The (ethylene and/or propylene)/(α,β-unsaturated carboxylic acid and/or α,β-unsaturated carboxylate) copolymer has a carboxyl group and/or a carboxylate group, and therefore is the functional group-containing copolymer polyolefin resin (B). Even the (ethylene and/or propylene)/(α,β-unsaturated carboxylic acid and/or α,β-unsaturated carboxylate) copolymer further having a functional group other than a carboxyl group and a carboxylate group introduced due to a compound having the above-mentioned functional group is the functional group-containing copolymer polyolefin resin (B).

From the viewpoint of the pinhole resistance and transparency of the film formed from the polyamide resin composition, the functional group-containing copolymer polyolefin resin (B) is more preferably an ethylene/α-olefin copolymer having bonded thereto a group derived from maleic anhydride, itaconic anhydride, or citraconic anhydride, further preferably an ethylene/α-olefin copolymer having bonded thereto a group derived from maleic anhydride, and especially preferably an ethylene/1-butene copolymer having bonded thereto a group derived from maleic anhydride.

The polyamide resin composition contains the functional group-containing copolymer polyolefin resin (B) in an amount of 0.1 to 2.0% by mass, based on 100 mass% of the polyamide resin composition. The amount of the contained functional group-containing copolymer polyolefin resin (B) is in the above-mentioned range, and therefore the polyamide resin composition has an advantageous feature such that a film having excellent film transparency and having suppressed generation of a film gel can be formed from the composition. The amount of the contained functional group-containing copolymer polyolefin resin (B) is preferably 0.2 to 1.9% by mass, more preferably 0.4 to 1.8% by mass, and especially preferably 0.6 to 1.7% by mass, based on 100 mass% of the polyamide resin composition. The amount of the contained functional group-containing copolymer polyolefin resin (B) can be 0.2 to 1.5% by mass or 0.4 to 1.0% by mass, based on 100 mass% of the polyamide resin composition.

When the amount of the functional group-containing copolymer polyolefin resin (B) contained in the polyamide resin composition (100% by mass) is less than 0.1% by mass, the film formed from the composition has poor transparency, and, when the amount of the component (B) is more than 2.0% by mass, suppression of the generation of a film gel is reduced.

### <Functional group-non-containing copolymer polyolefin resin (C)>

The polyamide resin composition contains a functional group-non-containing copolymer polyolefin resin (C). By virtue of containing the functional group-non-containing copolymer polyolefin resin (C), a film formed from the polyamide resin composition is improved in the pinhole resistance in a low temperature environment. Further, the functional group-non-containing copolymer polyolefin resin (C) does not contain a functional group, and hence has poor compatibility with the polyamide resin (A), but has low reactivity and therefore is unlikely to generate a film gel due to a reaction caused by, for example, heat, and thus the resultant film can be prevented from having poor appearance due to the film gel.

The functional group-non-containing copolymer polyolefin resin (C) is preferably an (ethylene and/or propylene)/α-olefin copolymer, and more preferably an ethylene/α-olefin copolymer.

The ethylene/α-olefin copolymer is a comonomer of ethylene and an α-olefin having 3 or more carbon atoms. The α-olefin preferably has 3 to 20 carbon atoms, and more preferably 3 to 10 carbon atoms. The content of ethylene units in the ethylene/α-olefin copolymer is preferably 10 to 90 mol%, and more preferably 20 to 80 mol%.

The propylene/α-olefin copolymer is a comonomer of propylene and an α-olefin having 4 or more carbon atoms. The α-olefin preferably has 4 to 20 carbon atoms, and more preferably 4 to 10 carbon atoms. The content of propylene units in the propylene/α-olefin copolymer is preferably 10 to 90 mol%, and more preferably 20 to 80 mol%.

The molecular structure of the functional group-non-containing copolymer polyolefin resin (C) may be a linear structure or a branched structure having a long-chain or short-chain side chain. With respect to the functional group-non-containing copolymer polyolefin resin (C), the resins may be used individually or in combination.

Specific examples of α-olefins include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. These olefins may be used individually or in combination.

Especially, from the viewpoint of imparting excellent flexibility to the polyamide resin composition, the functional group-non-containing copolymer polyolefin resin (C) is preferably an ethylene/α-olefin copolymer wherein the α-olefin is at least one member selected from the group consisting of propylene, 1-butene, 1-hexene, and 1-octene, and especially preferably an ethylene/α-olefin copolymer wherein the α-olefin is 1-butene. That is, the functional group-non-containing copolymer polyolefin resin (C) is especially preferably an ethylene/1-butene copolymer.

The functional group-non-containing copolymer polyolefin resin (C) may be one which is copolymerized with, for example, a non-conjugated diene, such as 1,5-hexadiene or 1,7-octadiene, or a cyclic olefin, such as cyclopentene, in such an amount that the effects aimed at by the present invention are not sacrificed.

With respect to the functional group-non-containing copolymer polyolefin resin (C), from the viewpoint of rendering the viscosity of the composition being molten in the appropriate range to surely achieve desired formability, and avoiding an excessively large reduction of the melt tension to prevent an occurrence of problem during the forming, such as drawdown, the functional group-non-containing copolymer polyolefin resin (C) preferably has a melt flow rate (MFR) of 0.1 to 10 g/10 minutes, more preferably 0.5 to 7 g/10 minutes, and especially preferably 1 to 5 g/10 minutes, as measured at a temperature of 190°C and under a load of 2.16 kg in accordance with ASTM D1238. Further, the functional group-non-containing copolymer polyolefin resin (C) desirably has a density of 850 to 900 kg/m³, as measured in accordance with ASTM D1505.

The amount of the contained functional group-non-containing copolymer polyolefin resin (C) is 0.1 to 2.0% by mass, based on 100 mass% of the polyamide resin composition. The amount of the contained functional group-non-containing copolymer polyolefin resin (C) is in the above-mentioned range, and therefore the polyamide resin composition exhibits excellent compatibility of the component (C) with the polyamide resin (A), the functional group-containing copolymer polyolefin resin (B), and an ethylene/(meth)acrylic acid copolymer metal salt (D), so that the melt stability of the polyamide resin composition and formability of a film are improved. Further, a polyamide film formed from the polyamide resin composition is prevented from having poor appearance due to a film gel, making it possible to maintain transparency of the film and improve the pinhole resistance in a low temperature environment. The amount of the contained functional group-non-containing copolymer polyolefin resin (C) is preferably 0.5 to 1.8% by mass, more preferably 0.6 to 1.7% by mass, and further preferably 0.6 to 1.4% by mass, based on 100 mass% of the polyamide resin composition. The amount of the contained functional group-non-containing copolymer polyolefin resin (C) can be 0.8 to 1.7% by mass, based on 100 mass% of the polyamide resin composition.

When the amount of the contained functional group-non-containing copolymer polyolefin resin (C) is less than 0.1% by mass, based on 100 mass% of the polyamide resin composition, the formed film is not improved in the pinhole resistance in a low temperature environment, and it is likely that a film gel is increased, so that the resultant film has poor appearance. When the amount of the component (C) is more than 2.0% by mass, the dispersibility of the functional group-non-containing copolymer polyolefin resin (C) in the polyamide resin composition becomes poor and thus a film gel is increased, so that the resultant film has poor transparency.

### <Ethylene/(meth)acrylic acid copolymer metal salt (D)>

The polyamide resin composition contains a metal salt (D) of an ethylene/(meth)acrylic acid copolymer (an ethylene/(meth)acrylic acid copolymer metal salt (D)). The ethylene/(meth)acrylic acid copolymer metal salt (D) means a copolymer of ethylene, with methacrylic acid, a methacrylate, acrylic acid and/or an acrylate, which is neutralized by a metal or a metal ion. By virtue of containing the ethylene/(meth)acrylic acid copolymer metal salt (D), the dispersibility of the functional group-non-containing copolymer polyolefin resin (C) in the polyamide resin composition is improved, so that a film formed from the polyamide resin composition has an improved pinhole resistance in a low temperature environment, and further can be prevented from having poor appearance due to a film gel which is caused by unsatisfactory dispersion of the functional group-non-containing copolymer polyolefin resin (C). The ethylene/(meth)acrylic acid copolymer metal salt (D) may be a single one or a combination of two or more metal salts.

With respect to the ethylene/(meth)acrylic acid copolymer used in the ethylene/(meth)acrylic acid copolymer metal salt (D), there is no particular limitation as long as the copolymer uses ethylene, and methacrylic acid, a methacrylate, acrylic acid and/or an acrylate as raw materials, and the copolymer may further use another raw material. That is, the ethylene/(meth)acrylic acid copolymer may have units other than the ethylene units and (meth)acrylic acid units (acrylic acid, acrylate, methacrylic acid, and methacrylate units). For example, an ethylene/methacrylic acid/acrylate copolymer can be used as the ethylene/(meth)acrylic acid copolymer.

With respect to the ethylene/(meth)acrylic acid copolymer, from the viewpoint of the compatibility with the polyamide resin (A), the content of ethylene units in the ethylene/(meth)acrylic acid copolymer is preferably 10 to 90 mol%, and more preferably 20 to 80 mol%. Further, the content of (meth)acrylic acid units in the ethylene/(meth)acrylic acid copolymer is preferably 10 to 90 mol%, and more preferably 20 to 80 mol%.

The ethylene/(meth)acrylic acid copolymer metal salt (D) can contain metal salts of two or more ethylene/(meth)acrylic acid copolymers having different ethylene unit contents. In this case, the content of ethylene units in the ethylene/(meth)acrylic acid copolymer metal salt (D) can be determined from, for example, the content of ethylene in a hydrolysate of each ethylene/(meth)acrylic acid copolymer metal salt and the molar ratio of the ethylene mixed in each ethylene/(meth)acrylic acid copolymer metal salt. The content of ethylene units in the ethylene/(meth)acrylic acid copolymer metal salt (D) can be determined by a nuclear magnetic resonance (NMR) method.

Examples of the metals and metal ions used in the ethylene/(meth)acrylic acid copolymer metal salt (D) include Na, K, Cu, Mg, Ca, Ba, Zn, Cd, Al, Fe, Co, and Ni and ions thereof. These may be used individually or in combination, but it is preferred that the metal salt contains at least Zn (referred to also as "zinc" in the present specification).

From the viewpoint of the improvement of the pinhole resistance at low temperatures and suppression of the generation of a film gel, the ethylene/(meth)acrylic acid copolymer metal salt (D) is preferably at least one member of a partial zinc salt of a copolymer of ethylene and (meth)acrylic acid and a partial zinc salt of a copolymer of ethylene, methacrylic acid, and an acrylate, and, from the viewpoint of improving the compatibility with the polyamide resin (A), the ethylene/(meth)acrylic acid copolymer metal salt (D) is more preferably a partial zinc salt of a copolymer of ethylene and (meth)acrylic acid, and further preferably a partial zinc salt of a copolymer of ethylene and methacrylic acid. Examples of partial zinc salts of a copolymer of ethylene and (meth)acrylic acid include HIMILAN (registered trademark) 1706, manufactured by Dow-Mitsui Polychemicals Co., Ltd. Examples of partial zinc salts of a copolymer of ethylene, methacrylic acid, and an acrylate include HIMILAN (registered trademark) 1855, manufactured by Dow-Mitsui Polychemicals Co., Ltd.

With respect to the ethylene/(meth)acrylic acid copolymer metal salt (D), from the viewpoint of rendering the viscosity of the composition being molten in the appropriate range to surely achieve desired formability, and avoiding an excessively large reduction of the melt tension to prevent an occurrence of problem during the forming, such as drawdown, the ethylene/(meth)acrylic acid copolymer metal salt (D) preferably has a melt flow rate (MFR) of 0.5 to 3.0 g/10 minutes, more preferably 0.5 to 2.0 g/10 minutes, and further preferably 0.5 to 1.5 g/10 minutes, as measured at a temperature of 190°C and under a load of 2.16 kg in accordance with JIS K 7210-1.

The amount of the contained ethylene/(meth)acrylic acid copolymer metal salt (D) is 0.1 to 2.0% by mass, based on 100 mass% of the polyamide resin composition. The amount of the contained ethylene/(meth)acrylic acid copolymer metal salt (D) is in the above-mentioned range, and therefore a film formed from the polyamide resin composition has an improved pinhole resistance in a low temperature environment, and generation of a film gel can be suppressed. From the viewpoint of improving the pinhole resistance and suppressing generation of a film gel, the amount of the contained ethylene/(meth)acrylic acid copolymer metal salt (D) is preferably 0.10% by mass or more, more preferably 0.15% by mass or more, further preferably 0.20% by mass or more, and especially preferably 0.40% by mass or more, based on 100 mass% of the polyamide resin composition. The amount of the contained ethylene/(meth)acrylic acid copolymer metal salt (D) can be 0.2% by mass or more or 0.4% by mass or more, based on 100 mass% of the polyamide resin composition. Further, from the viewpoint of the reduction of a film gel and transparency of the film, the amount of the contained ethylene/(meth)acrylic acid copolymer metal salt (D) is preferably 1.0% by mass or less, more preferably 0.9% by mass or less, further preferably 0.8% by mass or less, further more preferably 0.7% by mass or less, and especially preferably 0.6% by mass or less, based on 100 mass% of the polyamide resin composition.

Further, the metal ion neutralization degree of the ethylene/(meth)acrylic acid copolymer metal salt (D) is preferably in the range of from 20 to 80%, and more preferably in the range of from 50 to 70%. When the metal ion neutralization degree is in the above range, it is possible to maintain transparency of the polyamide film. The metal ion neutralization degree of the ethylene/(meth)acrylic acid copolymer metal salt (D) is defined by the following formula. Metal ion neutralization degree (%) of the ethylene/(meth)acrylic acid copolymer metal salt (D) = 100 × {(Molar number of the neutralized carboxyl group in the ethylene/(meth)acrylic acid copolymer metal salt (D))/(Total molar number of the carboxyl group in the ethylene/(meth)acrylic acid copolymer metal salt (D))}

When the amount of the contained ethylene/(meth)acrylic acid copolymer metal salt (D) is less than 0.1% by mass, based on 100 mass% of the polyamide resin composition, the formed film is not improved in the pinhole resistance in a low temperature environment, and, when the amount of the component (D) is more than 2.0% by mass, the film formability and transparency of the film become poor, and further a film gel is increased.

### <<Ratio of components (B) to (D)>>

From the viewpoint of the pinhole resistance in a low temperature environment of the film formed from the polyamide resin composition, the total amount of components (B) to (D) contained in the polyamide resin composition is 0.3% by mass or more, preferably 1.0% by mass or more, and more preferably 2.0% by mass or more, based on 100 mass% of the polyamide resin composition. Further, from the viewpoint of the dispersibility of the components in the polyamide resin composition, the total amount of components (B) to (D) contained in the polyamide resin composition is 6.0% by mass or less, based on 100 mass% of the polyamide resin composition, and, from the viewpoint of the reduction of a film gel and transparency of the polyamide film, the total amount of components (B) to (D) is preferably 3.4% by mass or less, and more preferably 3.0% by mass or less.

The mass ratio (C/B) of the functional group-non-containing copolymer polyolefin resin (C) to the functional group-containing copolymer polyolefin resin (B) is preferably 0.9 to 3.2, more preferably 0.9 to 3.1, and further preferably 0.9 to 2.0. The mass ratio (C/B) of the functional group-non-containing copolymer polyolefin resin (C) to the functional group-containing copolymer polyolefin resin (B) can be 1.0 to 3.2 or 1.0 to 2.0. When the mass ratio (C/B) is in the above range, it is likely that the transparency of the film is improved.

The mass ratio (C/D) of the functional group-non-containing copolymer polyolefin resin (C) to the ethylene/(meth)acrylic acid copolymer metal salt (D) is preferably 1.7 to 8.0, more preferably 1.7 to 5.1, further preferably 1.7 to 4.0, and especially preferably 1.7 to 3.0. The mass ratio (C/D) of the functional group-non-containing copolymer polyolefin resin (C) to the ethylene/(meth)acrylic acid copolymer metal salt (D) can be 1.8 to 8.0 or 1.8 to 3.0. When the mass ratio (C/D) is in the above range, it is likely that the dispersibility of the functional group-non-containing copolymer polyolefin resin (C) is improved to suppress generation of a film gel, so that the pinhole resistance in a low temperature environment is improved.

### <Additional component (E)>

The polyamide resin composition can contain an additional component (E) other than components (A) to (D). Examples of additional components include a thermoplastic resin other than components (A) to (D), an antioxidant, an anti-blocking agent, a lubricant, a nucleating agent, a plasticizer, a foaming agent, a stabilizer, an ultraviolet light absorber, a weathering agent, an anti-fogging agent, and a colorant. Especially, the polyamide resin composition preferably contains an anti-blocking agent, an antioxidant and/or a lubricant.

The amount of the contained additional component (E) is 4.0% by mass or less, preferably 3.5% by mass or less, and especially preferably 3.0% by mass or less, based on 100 mass% of the polyamide resin composition. Further, the amount of the contained additional component (E) is preferably 0.01% by mass or more, more preferably 0.02% by mass or more, and further preferably 0.03% by mass or more, based on 100 mass% of the polyamide resin composition.

### (Anti-blocking agent)

The polyamide resin composition preferably contains an anti-blocking agent for the purpose of imparting slipperiness to the formed film. Examples of anti-blocking agents include talc, diatomaceous earth, calcium carbonate, minerals, such as feldspar and quartz, silica, and crosslinked resin beads. The anti-blocking agent may be a single one or a combination of two or more anti-blocking agents. Especially, the anti-blocking agent is preferably silica. With respect to the anti-blocking agent, synthetic silica is preferred, and especially, synthetic silica produced by a precipitation method is more preferred. The anti-blocking agent preferably has an average particle diameter of 0.1 to 15 µm, and more preferably 0.3 to 10 µm, as measured by a laser diffraction method.

The amount of the anti-blocking agent contained is preferably 0.01 to 1.0% by mass, more preferably 0.04 to 0.5% by mass, and especially preferably 0.1 to 0.3% by mass, based on 100 mass% of the polyamide resin composition.

### (Antioxidant)

From the viewpoint of further reducing the amount of the film gel generated, the polyamide resin composition preferably contains an antioxidant. The antioxidant may be a single one or a combination of two or more antioxidants. The antioxidant is preferably at least one member selected from the group consisting of a phenolic compound, a phosphorus compound, and a sulfur compound.

The phenolic compound is preferably a hindered phenolic compound. Examples of phenolic compounds include pentaerythritol-tetrakis[3-(3',5'-di-tert-butyl-4'-hydroxyphenyl)propionate], 2,6-di-t-butylphenol, 2,4-dimethyl-6-t-butylphenol, butylhydroxytoluene (BHT), 2,6-di-t-butyl-4-ethyl-phenol, 2,4,6-tri-t-butylphenol, 2,6-di-t-butyl-4-s-butylphenol, butylhydroxyanisole (BHA), tocopherol, 2,6-di-t-butyl-4-hydroxymethylphenol, n-octadecyl-β-(4'-hydroxy-3',5'-di-t-butylphenyl)propionate, 2-t-butyl-4-(N,N-dimethylaminomethyl)phenol, 3,5-di-t-butyl-4-hydroxybenzylphosphonate-diethyl ester, propyl gallate, octyl gallate, lauryl gallate, 2,2'-methylenebis(4-methyl-6-t-butylphenol), 2,2'-methylenebis(4-ethyl-6-t-butylphenol), 4,4'-methylenebis(2,6-di-t-butylphenol), 2,2'-methylenebis(4-methyl-6-cyclohexylphenol), 2,2'-dihydroxy-3,3'-di(α-methylcyclohexyl)-5,5'-dimethyldiphenylmethane, 2,2'-dimethylene-bis-(6-α-methyl-benzyl-p-cresol), 2,2'-ethylidene-bis(4,6-di-t-butylphenol), 2,2'-butylidene-bis(4-methyl-6-t-butylphenol), 4,4'-butylidenebis(3-methyl-6-t-butylphenol), triethylene glycol-N-bis-3-(3-t-butyl-4-hydroxy-5-methylphenyl)propionate, 1,6-hexanediol bis[3-(3,5-di-t-butyl-4-hydroxyphenyl)propionate, bis[2-t-butyl-4-methyl-6-(3-t-butyl-5-methyl-2-hydroxybenzyl)phenyl] terephthalate, 3,9-bis[2-{3-(3-t-butyl-4-hydroxy-5-methylphenyl)propionyloxy}-1,1-dimethylethyl]-2,4,8,10-tetraoxaspiro[5,5]undecane, 4,4'-thiobis(6-t-butyl-m-cresol), 4,4'-thiobis(3-methyl-6-t-butylphenol), 2,2'-thiobis(4-methyl-6-t-butylphenol), bis(3,5-di-t-butyl-4-hydroxybenzyl) sulfide, 4,4'-di- or tri-thiobis(2,6-di-t-butylphenol), 2,2-thiodiethylenebis-[3(3,5-di-t-butyl-4-hydroxyphenyl)propionate], 2,4-bis(n-octylthio)-6-(4-hydroxy-3',5'-di-t-butylanilino)-1,3,5-triazine, N,N'-hexamethylenebis-(3,5-di-t-butyl-4-hydroxyhydrocinnamamide, N,N'-bis[3-(3,5-di-t-butyl-4-hydroxyphenyl)propionyl]hydrazine, calcium (3,5-di-t-butyl-4-hydroxybenzylmonoethylphosphonate), an alkylated bisphenol, 1,1,3-tris(2-methyl-4-hydroxy-5-t-butylphenyl)butane, 1,3,5-trimethyl-2,4,6-tris(3,5-di-t-butyl-4-hydroxybenzyl)benzene, tris(3,5-di-t-butyl-4-hydroxyphenyl) isocyanurate, tris(3,5-di-t-butyl-4-hydroxybenzyl) isocyanurate, 1,3,5-tris(4-t-butyl-3-hydroxy-2,6-dimethylbenzyl) isocyanurate, 1,3,5-tris2[3(3,5-di-t-butyl-4-hydroxyphenyl)propionyloxy]ethyl isocyanate, tetrakis[methylene-3-(3',5'-di-t-butyl-4-hydroxyphenyl)propionate]methane, and butyric acid 3,3-bis(3-t-butyl-4-hydroxyphenyl)ethylene ester.

Examples of phosphorus compounds include triphenyl phosphite, diphenylnonylphenyl phosphite, tris-(2,4-di-t-butylphenyl) phosphite, trisnonylphenyl phosphite, tris-(mono- or di-mixed nonylphenyl) phosphite, diphenylisooctyl phosphite, 2,2'-methylenebis(4,6-di-t-butylphenyl)octyl phosphite, diphenylisodecyl phosphite, diphenylmono(tridecyl) phosphite, 2,2'-ethylidenebis(4,6-di-t-butylphenol) fluorophosphite, phenyldiisodecyl phosphite, phenyldi(tridecyl) phosphite, tris(2-ethylhexyl) phosphite, tris(isodecyl) phosphite, tris(tridecyl) phosphite, dibutylhydrogen phosphite, trilauryl trithiophosphite, tetrakis(2,4-di-t-butylphenyl)4,4'-biphenylene diphosphonite, 4,4'-isopropylidenediphenolalkyl(C12-C15) phosphite, 4,4'-butylidenebis(3-methyl-6-t-butylphenyl)di-tridecyl phosphite, distearyl-pentaerythritol diphosphite, bis(nonylphenyl)pentaerythritol diphosphite, bis(2,4-di-t-butylphenyl)pentaerythritol diphosphite, cyclic neopentanetetraylbis(2,6-di-t-butyl-4-methylphenyl phosphite, phenyl-bisphenol A pentaerythritol diphosphite, tetraphenyldipropylene glycol diphosphite, 1,1,3-tris(2-methyl-4-di-tridecylphosphite-5-t-butylphenyl)butane, tetraphenyltetra(tridecyl)pentaerythritol tetra phosphite, zinc dialkyldithiophosphate (ZnDTP), 3,4,5,6-dibenz-1,2-oxaphosphan-2-oxide, 3,5-di-t-butyl-4-hydroxybenzyl phosphite-diethyl ester, and hydrogenated bisphenol A phosphite polymer.

Examples of sulfur compounds include dilauryl-3,3'-thiodipropionate (DLTTDP), ditridecyl-3,3'-thiodipropionate, dimyristyl-3,3'-thiodipropionate (DMTDP), distearyl-3,3'-thiodipropionate (DSTDP), laurylstearyl-3,3'-thiodipropionate, pentaerythritol tetra(β-lauryl-thiopropionate), stearylthiopropionamide, bis[2-methyl-4-(3-n-alkyl(C12-C14)thiopropionyloxy)-5-t-butylphenyl] sulfide, dioctadecyl disulfide, 2-mercaptobenzimidazole, 2-mercapto-6-methylbenzimidazole, and 1,1'-thiobis(2-naphthol).

As another antioxidant, an organic antioxidant other than the phenolic compound, phosphorus compound, and sulfur compound, or an inorganic antioxidant, such as a metal halide compound, may be used. Examples of metal halide compounds include copper(I) iodide, potassium iodide, copper(I) bromide, and potassium bromide.

Examples of commercially available antioxidants preferably used include Irganox (registered trademark) 1010, Irganox (registered trademark) 1098, Irgafos (registered trademark) 168, Irganox (registered trademark) B220, Irganox (registered trademark) B225 (each of which is manufactured by BASF Japan Ltd.), and Sumilizer (registered trademark) GP, Sumilizer (registered trademark) GA-80 (each of which is manufactured by Sumitomo Chemical Co., Ltd.). Especially, from the viewpoint of the prevention of deterioration by heat of the functional group-containing copolymer polyolefin resin (B), the functional group-non-containing copolymer polyolefin resin (C), and the ethylene/(meth)acrylic acid copolymer metal salt (D), preferred are Irganox (registered trademark) 1010, Irganox (registered trademark) 1098, and Irgafos (registered trademark) 168.

From the viewpoint of the prevention of deterioration by heat of the functional group-containing copolymer polyolefin resin (B), the functional group-non-containing copolymer polyolefin resin (C), and the ethylene/(meth)acrylic acid copolymer metal salt (D), and prevention of bleedout of an antioxidant to the surface of the formed film, the amount of the contained at least one antioxidant selected from the group consisting of a phenolic compound, a phosphorus compound, and a sulfur compound is preferably 0.01 to 1.0% by mass, more preferably 0.04 to 0.5% by mass, and especially preferably 0.1 to 0.4% by mass, based on 100 mass% of the polyamide resin composition.

### (Lubricant)

The polyamide resin composition preferably contains a lubricant for the purpose of improving the slipperiness of the pellets before being molded, improving the slipperiness between a processing machine and the pellets, and improving the slipperiness between a formed film and another one. Examples of lubricants include compounds, such as a terminal modification product of polyalkylene glycol, a phosphate or phosphite, a higher fatty acid monoester, a higher fatty acid or a metal salt thereof, a carboxamide, low molecular-weight polyethylene, magnesium silicate, and a substituted benzylidenesorbitol. These compounds may be used individually or in combination.

Examples of terminal modification products of polyalkylene glycol include a terminal modification product of polyethylene glycol and a terminal modification product of polypropylene glycol.

More specific examples of phosphates and phosphites include aliphatic phosphates and aliphatic phosphites, such as di(2-ethylhexyl) phosphate, tridecyl phosphite, tris(tridecyl) phosphite, and tristearyl phosphite; and aromatic phosphites, such as triphenyl phosphite and diphenylmonodecyl phosphite.

Examples of higher fatty acid monoesters include myristyl myristate, stearyl stearate, behenyl behenate, oleyl oleate, and hexadecyl myristate.

Examples of higher fatty acids include myristic acid, palmitic acid, behenic acid, oleic acid, and arachidic acid.

Examples of higher fatty acid metal salts include zinc stearate, lithium stearate, calcium stearate, magnesium stearate, and aluminum palmitate.

Examples of carboxamides include aliphatic monocarboxamides, such as lauramide, palmitamide, oleamide, stearamide, erucamide, behenamide, ricinoleic acid amide, and 12-hydroxystearamide; N-substituted aliphatic monocarboxamides, such as N-lauryllauramide, N-palmitylpalmitamide, N-oleylpalmitamide, N-oleyloleamide, N-oleylstearamide, N-stearylstearamide, N-stearyloleamide, N-stearylerucamide, N-stearyl-12-hydroxystearamide, N-oleyl-12-hydroxystearamide, methylolstearamide, methylolbehenamide, and 12-hydroxystearic acid monoethanol amide; aliphatic carboxylic acid bisamides, such as methylenebisstearamide, methylenebislauramide, methylenebis-12-hydroxystearamide, ethylenebiscapramide, ethylenebislauramide, ethylenebisoleamide, ethylenebispalmitamide, ethylenebisstearamide, ethylenebiserucamide, ethylenebisbehenamide, ethylenebisisostearamide, ethylenebis-12-hydroxystearamide, butylenebisstearamide, hexamethylenebisoleamide, hexamethylenebisstearamide, hexamethylenebisbehenamide, hexamethylenebis-12-hydroxystearamide, N,N'-dioleylsebacamide, N,N'-dioleyladipamide, N,N'-distearyladipamide, and N,N'-distearylsebacamide; alicyclic carboxamides, such as N,N'-dicyclohexanecarbonyl-1,4-diaminocyclohexane, 1,4-cyclohexanedicarbamide, 1,4-cyclohexanedicarboxylic acid diaminocyclohexane, 1,2,3,4-butanetetracarboxylic acid tetracyclohexylamide, N,N'-bis(3-hydroxypropyl)-1,4-cubanedicarbamide, N,N'-(1,4-cyclohexanediyl)bis(acetamide), and tris(methylcyclohexyl)propanetricarboxamide; and aromatic carboxamides, such as 1,4-cyclohexanedicarboxylic acid dianilide, 1,4-cyclohexanedicarboxylic acid dibenzylamide, trimesic acid tris(t-butylamide), trimesic acid tricyclohexylamide, trimesic acid tri(2-methylcyclohexylamide), trimesic acid tri(4-cyclohexylamide), 2,6-naphthalenedicarboxylic acid dicyclohexylamide, N,N'-dibenzylcyclohexane-1,4-dicarbamide, N,N'-distearylisophthalamide, N,N'-distearylterephthalamide, m-xylylenebisstearamide, and m-xylylenebis-12-hydroxystearamide.

Examples of low molecular-weight polyethylene include polyethylene having a molecular weight in the range of from 500 to 5,000, and preferred is polyethylene having a molecular weight in the range of from 1,000 to 3,000.

Examples of magnesium silicate include those having an average particle diameter of 1 to 10 µm.

Examples of substituted benzylidenesorbitols include a substituted benzylidenesorbitol synthesized by dehydration condensation of sorbitol and a substituted benzaldehyde in the presence of an acid catalyst.

From the viewpoint of the reduction of a friction between the pellets and the screw in an extruder, the lubricant is preferably a carboxamide, more preferably an aliphatic carboxylic acid bisamide, and especially preferably an ethylenebisamide, such as ethylenebisstearamide. Further, as a higher fatty acid metal salt, for example, magnesium stearate, calcium stearate, or zinc stearate is effective.

The amount of the lubricant contained is preferably 0.01 to 1.0% by mass, more preferably 0.04 to 0.5% by mass, and especially preferably 0.08 to 0.2% by mass, based on 100 mass% of the polyamide resin composition.

### [Method for producing the polyamide resin composition]

With respect to the method for producing the polyamide resin composition, there is no particular limitation, and, for example, the method described below can be used.

The polyamide resin (A), the functional group-containing copolymer polyolefin resin (B), the functional group-non-containing copolymer polyolefin resin (C), the ethylene/(meth)acrylic acid copolymer metal salt (D), and the additional component (E) are melt-kneaded using a kneading machine to obtain a polyamide resin composition. Examples of kneading machines include a single-screw or twin-screw extruder, a Banbury mixer, a kneader, and a mixing roll. For example, there are a method in which, using a twin-screw extruder, all the raw materials are mixed and then melt-kneaded; a method in which part of the raw materials are mixed and then melt-kneaded, and the remaining raw materials are further mixed and melt-kneaded; and a method in which part of the raw materials are mixed and then, while melt-kneading the resultant mixture, the remaining raw materials are mixed using a side feeder, and any of these methods may be used. From the viewpoint of the film production stability when the composition is melted by a film forming machine or the like and formed and processed into a film, and dispersibility of the components in the polyamide resin composition, the polyamide resin composition is preferably processed into the form of pellets. Further, the polyamide resin composition in the form of pellets obtained by melt-kneading can be mixed with a certain type of polyamide resin and then used.

### [Polyamide film]

The polyamide film comprises the polyamide resin composition. The polyamide film may be a non-stretched polyamide film, or may be a stretched polyamide film obtained by stretching the non-stretched polyamide film. From the viewpoint of the mechanical strength, the polyamide film is preferably a stretched polyamide film.

With respect to the method for producing the polyamide film, there is no particular limitation, and, for example, a conventionally known method for producing a polyamide film can be employed. For example, the polyamide film can be produced by, using an extruder, melt-kneading the polyamide resin composition obtained by the above-mentioned method, and extruding the composition into a film form using a die, such as a T-die or a coat-hanger die, and casting the extruded composition on a casting roll surface and then cooling the cast film. Alternatively, the polyamide film can be produced by a forming method according to a water-cooled or air-cooled inflation method.

The produced polyamide film may be subjected to stretching treatment to obtain a stretched film. In this case, the produced polyamide film may be subjected to uniaxial stretching to obtain a uniaxially stretched film, or may be subjected to biaxial stretching (simultaneous biaxial stretching or successive biaxial stretching) to obtain a biaxially stretched film.

With respect to the stretching method, there is no particular limitation, and there can be mentioned a uniaxial stretching method using a heated roll, a simultaneous biaxial stretching method by a tubular method, and a successive biaxial stretching method using a heated roll and a tenter. With respect to the temperature of the heated roll, there is no particular limitation, and the temperature can be in the range of from 35 to 130°C, and can be appropriately selected according to the material for the polyamide film and the intended stretch ratio. The stretch ratio includes a stretch ratio in the direction of extrusion (MD) of the film and a stretch ratio in the direction (TD) perpendicular to the direction of extrusion of the film. With respect to the stretch ratio in the direction of extrusion of the film, there is no particular limitation, and the stretch ratio in the direction of extrusion is preferably 2 times or more, more preferably 2 to 6 times, and especially preferably 2.5 to 5 times. With respect to the stretch ratio in the direction perpendicular to the direction of extrusion of the film, there is no particular limitation, and the stretch ratio in the direction perpendicular to the direction of extrusion is preferably 2 times or more, more preferably 2 to 6 times, and especially preferably 2.5 to 5 times. The stretch ratio can be appropriately controlled according to the purpose.

With respect to the thickness of the film, there is no particular limitation, and, for example, the thickness of the film can be appropriately selected according to the purpose. With respect to the single-layer polyamide film, for example, in the case of a non-stretched film, the thickness of the film can be 10 to 300 µm, and, in the case of a stretched film, the thickness of the film can be 5 to 100 µm.

The polyamide film exhibits excellent pinhole resistance. Evaluation of the pinhole resistance can be specifically made by subjecting the polyamide film to 1,000-time flexing test at 5°C using Gelvo type Flex-Cracking Tester (manufactured by Tester Sangyo Co., Ltd.) in accordance with MIL-B-131C, and then placing the resultant film on a recording paper, and then applying an India ink to the film and measuring the number of black spots recorded on the recording paper. The measured number of black spots is preferably less than 95/0.04 m², more preferably less than 50/0.04 m², and further preferably less than 3/0.04 m².

Further, the polyamide film has a feature such that the film does not have poor appearance due to a film gel. Evaluation of the number of film gels can be specifically made using a fish-eye counter, manufactured by FUTEC INC. Pellets of the polyamide resin composition are fed to a single-screw extruder having a T-die (25 mmϕ Ex T-die film forming machine, manufactured by GM ENGINEERING Co., Ltd.) to prepare a non-stretched polyamide film having a thickness of 40 µm, and the number of film gels having a diameter of 50 µm or more in the polyamide film per 0.04 m² is on-line measured using a fish-eye counter.

The non-stretched polyamide film preferably has a haze ratio of 10% or less, more preferably 9% or less, and further preferably 8% or less. The stretched polyamide film preferably has a haze ratio of 15% or less, more preferably 13% or less, and further preferably 11% or less. The haze ratio of the polyamide film is a value as measured in accordance with ASTM D-1003.

The non-stretched polyamide film preferably has a gloss value of 80% or more, more preferably 90% or more, further preferably 100% or more, and especially preferably 120% or more. The stretched polyamide film preferably has a gloss value of 75% or more, more preferably 80% or more, further preferably 85% or more, and especially preferably 100% or more. The gloss value of the polyamide film is a value as measured in accordance with ASTM D-523.

### [Film laminate]

The film laminate comprises at least one layer of the polyamide film. As an example of the method for producing the film laminate, there can be mentioned a method comprising the step of laminating an additional layer on one surface or both surfaces of the polyamide film. With respect to the lamination method, there is no particular limitation, and there can be mentioned, for example, a co-extrusion method, an extrusion lamination method, and a dry lamination method, which are described in JP 2011-225870 A, and, from an economical point of view, a co-extrusion method is preferred. The produced film laminate may be subjected to stretching treatment to obtain a stretched film laminate. In this case, the produced film laminate may be subjected to uniaxial stretching to obtain a uniaxially stretched film laminate, or may be subjected to biaxial stretching (simultaneous biaxial stretching or successive biaxial stretching) to obtain a biaxially stretched film laminate. The stretching method and stretch ratio are as described above in connection with the item for the polyamide film.

### (Additional layer)

With respect to the additional layer, there is no particular limitation as long as the film laminate exhibits effects of the polyamide film, and there can be mentioned a thermoplastic resin layer (excluding the polyamide film layer in the present invention) and an adhesive resin layer (excluding the polyamide film layer in the present invention). The adhesive resin layer is appropriately selected for the purpose of improving the adhesion between the polyamide film layer in the present invention and, for example, a thermoplastic resin layer, such as low-density polyethylene or polypropylene, and formability.

The thermoplastic resin layer is a layer comprising a thermoplastic resin, specifically, a layer formed from a thermoplastic resin or a layer formed from a thermoplastic resin composition comprising a thermoplastic resin (hereinafter, the thermoplastic resin composition comprising a thermoplastic resin is frequently referred to as "thermoplastic resin composition"). The thermoplastic resin composition is specifically a composition comprising a thermoplastic resin and an additive.

Examples of thermoplastic resins include nonpolar polyolefin (for example, low-density polyethylene, linear low-density polyethylene, an ethylene/α-olefin having 3 to 8 carbon atoms copolymer, a propylene homopolymer, and a propylene/α-olefin having 4 to 8 carbon atoms copolymer), an ionomer, an ethylene/acrylic acid copolymer, an ethylene/vinyl acetate copolymer, an ethylene/acrylate copolymer, an ethylene/methacrylic acid copolymer, polyester, polyvinyl alcohol, and a polyamide resin. The thermoplastic resin layer comprising a polyamide resin is not the polyamide film layer in the present invention. The thermoplastic resin may have heat fusing properties. Examples of such thermoplastic resins having heat fusing properties include low-density polyethylene, linear low-density polyethylene, an ethylene/α-olefin having 3 to 8 carbon atoms copolymer, an ionomer, an ethylene/acrylic acid copolymer, an ethylene/vinyl acetate copolymer, an ethylene/acrylate copolymer, and an ethylene/methacrylic acid copolymer.

The thermoplastic resin is preferably a nonpolar polyolefin, an ethylene/vinyl acetate copolymer, or a thermoplastic resin having heat fusing properties. When the thermoplastic resin is a nonpolar polyolefin, it is likely that the film laminate is further improved in water vapor barrier properties. When the thermoplastic resin is a layer of an ethylene/vinyl acetate copolymer, it is likely that the film laminate is further lowered in oxygen gas permeability. When the thermoplastic resin is a thermoplastic resin having heat fusing properties, it is likely that, in the case where the polyamide film is used as a deep-drawing packaging film, the heat fusing temperature of the film with a cover material for deep-drawing packaging can be considerably reduced, so that the production efficiency is further improved.

The adhesive resin layer is a layer comprising an adhesive resin, specifically, a layer formed from an adhesive resin or a layer formed from an adhesive resin composition comprising an adhesive resin (hereinafter, the adhesive resin composition comprising an adhesive resin is frequently referred to as "adhesive resin composition"). The adhesive resin composition is specifically a composition comprising an adhesive resin and an additive. With respect to the adhesive resin, there is no particular limitation, and there can be mentioned acid-modified polyolefin resins, such as acid-modified polyethylene having grafted at least one monomer selected from an unsaturated carboxylic acid and a derivative thereof.

Examples of the additives contained in the thermoplastic resin composition and adhesive resin composition include the anti-blocking agent, antioxidant, and lubricant mentioned above in connection with the polyamide resin composition, and additives other than these additives.

### (Construction of layers)

Examples of specific constructions of layers of the film laminate include two layers of the polyamide film and a thermoplastic resin layer; three layers of polyamide film/adhesive resin layer/thermoplastic resin layer; at least three layers of the polyamide film, a thermoplastic resin layer, and at least one additional layer selected from the group consisting of the polyamide film, an adhesive resin layer, and a thermoplastic resin layer; and at least four layers of the polyamide film, a thermoplastic resin layer, an adhesive resin layer, and at least one additional layer selected from the group consisting of the polyamide film, an adhesive resin layer, and a thermoplastic resin layer. Specific examples of the constructions of layers include polyamide film/adhesive resin layer/thermoplastic resin layer, polyamide film/adhesive resin layer/thermoplastic resin layer/adhesive resin layer/thermoplastic resin layer, and thermoplastic resin layer/adhesive resin layer/polyamide film/adhesive resin layer/thermoplastic resin layer. The adhesive resin layer can be formed if necessary. These layers can be formed by, for example, a T-die method using a multilayer die or a water-cooled or air-cooled inflation method. Further, the layers can also be formed by extrusion lamination using an anchor coat agent or dry lamination using an urethane adhesive. The method for forming the layers is not particularly limited to the film forming method for multilayer construction. When the film laminate is a non-stretched film laminate and further is a deep-drawing packaging film, the film laminate preferably has a thermoplastic resin layer as an inner layer. In the film laminate, the layer in contact with the air corresponds to an outer layer, and the layer in contact with food which is to be packaged corresponds to an inner layer.

### (Thickness)

With respect to the thickness of the film laminate, there is no particular limitation, and the thickness can be selected according to the use of the film laminate. The thickness of each layer of the polyamide film in the film laminate can be 1 to 300 µm, preferably 2 to 100 µm, and more preferably 5 to 80 µm. The thickness of each layer of the thermoplastic resin layer can be appropriately selected according to the purpose, and, for example, is preferably in the range of from 8 to 120 µm. The thickness of each layer of the adhesive resin layer can be appropriately selected according to the purpose, and, for example, is preferably in the range of from 1 to 100 µm. With respect to the total thickness of layers of the film laminate, there is no particular limitation, and the total thickness is preferably 5 to 500 µm, more preferably 20 to 300 µm, and especially preferably 50 to 200 µm.

### [Use]

The polyamide resin composition can be used as a raw material for various types of molded articles. A molded article comprising the polyamide resin composition can be used in a wide variety of applications, such as a food packaging film, an automotive member, a computer and a related device, an optical device member, an electric or electronic device, an information and communication device, a precision device, a civil engineering and construction product, a medical product, and a household product, and is especially useful for a food packaging film.

The polyamide film and the film laminate do not have poor appearance due to a film gel and have excellent pinhole resistance in a low temperature environment. Therefore, the polyamide film and the film laminate can be advantageously used in the product packaging applications, particularly in the food packaging application.

The non-stretched polyamide film and the non-stretched film laminate have excellent deep-drawing properties, and therefore can be advantageously used as a food packaging film, particularly as a deep-drawing packaging film for food. When the non-stretched polyamide film or non-stretched film laminate is used as a deep-drawing packaging film, food is contained in a bottom material for deep-draw packaging, which is obtained by subjecting the film to deep-drawing forming, and packaged using a cover material. Examples of food to be contained in a bottom material for deep-drawing packaging include sliced food, such as ham and cheese. With respect to the cover material, there is no particular limitation, and the cover material can be appropriately selected according to the purpose.

The stretched polyamide film and the stretched film laminate have excellent mechanical strength and oxygen barrier properties, and therefore are useful for the food packaging film application such that the film is filled with, for example, food in a semifluid form, such as sausage (paste product); or food in a solid state, such as processed meat or ham, to package the food therein.

### EXAMPLES

Hereinbelow, the present invention will be described in more detail with reference to the following Examples and Comparative Examples, which should not be construed as limiting the scope of the present invention, and which can be appropriately changed or modified as long as the effects of the present invention can be obtained.

### [Raw materials used]

The raw materials used in the Examples and Comparative Examples are as shown below.

### (1) Polyamide resin (A)

Polyamide resin (A-1): polyamide 6 (relative viscosity, as measured under conditions at a polymer concentration of 10 mg/ml and at 25°C in 96% sulfuric acid in accordance with JIS K 6920: 3.4)
Polyamide resin (A-2): polyamide 6 (relative viscosity, as measured under conditions at a polymer concentration of 10 mg/ml and at 25°C in 96% sulfuric acid in accordance with JIS K 6920: 4.1)

### (2) Functional group-containing copolymer polyolefin resin (B or B')

Maleic anhydride-modified ethylene/butene copolymer (B-1): TAFMER (registered trademark) MH7510, manufactured by Mitsui Chemicals, Inc. (melt flow rate, as measured at 190°C and under a load of 2.16 kg in accordance with ASTM D1238: 40 g/10 minutes)
Maleic anhydride-modified ethylene/butene copolymer (B'-1): TAFMER (registered trademark) MH7010, manufactured by Mitsui Chemicals, Inc. (melt flow rate, as measured at 190°C and under a load of 2.16 kg in accordance with ASTM D1238: 0.9 g/10 minutes)

### (3) Functional group-non-containing copolymer polyolefin resin (C)

Ethylene/butene copolymer (C-1): TAFMER (registered trademark) DF740, manufactured by Mitsui Chemicals, Inc. (melt flow rate, as measured at 190°C and under a load of 2.16 kg in accordance with ASTM D1238: 3.6 g/10 minutes)

### (4) Ethylene/(meth)acrylic acid copolymer metal salt (D)

Partial zinc salt (D-1) of ethylene/methacrylic acid copolymer: HIMILAN (registered trademark) 1706, manufactured by Dow-Mitsui Polychemicals Co., Ltd. (melt flow rate, as measured at 190°C and under a load of 2.16 kg in accordance with JIS K 7210-1: 0.9 g/10 minutes)

### (5) Anti-blocking agent

Silica: MIZUKASIL (trademark) C-202, manufactured by Mizusawa Industrial Chemicals, Ltd. (average particle diameter, as measured by a laser diffraction method (solvent: 0.2% hexametaphosphoric acid): 2.4 µm)

### (6) Antioxidant

Hindered phenolic antioxidant: Irganox (registered trademark) 1010, manufactured by BASF Japan Ltd.

Phosphorus antioxidant: Irgafos (registered trademark) 168, manufactured by BASF Japan Ltd.

### (7) Lubricant

Ethylenebisstearamide (WH-100, manufactured by Kyoeisha Chemical Co., Ltd.)

### Examples 1 to 7 and Comparative Examples 1 to 4

The components shown in Table 1 were charged into the top of a twin-screw kneading machine ZSK32McPlus (manufactured by Coperion GmbH; screw diameter: 32 mm). The components were melt-kneaded under conditions such that the cylinder temperature of the twin-screw kneading machine was 230°C, the screw revolution speed was 500 rpm, and the discharge rate was 75 kg/h, preparing pellets of the polyamide resin compositions in Examples 1 to 7 and Comparative Examples 1 to 4.

In the formulation shown in Table 1, the unit is % by mass, and the whole of the resin composition corresponds to 100% by mass.

Using the pellets in each of Examples 1 to 7 and Comparative Examples 1 to 4, non-stretched polyamide films a, c, and d and biaxially stretched polyamide film b were prepared as described below.

### Non-stretched polyamide film a

Using the pellets in each of Examples 1 to 7 and Comparative Examples 1 to 4, and using a 40 mmϕ Ex T-die film forming machine, manufactured by Research Laboratory of Plastics Technology Co., Ltd., a non-stretched polyamide film a having a thickness of 50 µm was prepared.

### Biaxially stretched polyamide film b

Using the pellets in each of Examples 1 to 7 and Comparative Examples 1 to 4, and using a 40 mmϕ Ex T-die film forming machine, manufactured by Research Laboratory of Plastics Technology Co., Ltd., a non-stretched polyamide film having a thickness of 100 µm was prepared. The thus obtained non-stretched polyamide film was stretched at a stretching temperature of 100°C using a biaxial stretching machine, manufactured by Iwamoto Seisakusho, Co., Ltd., with 3.0 times in the longitudinal (MD) direction and 3.0 times in the transverse (TD) direction, i.e., 9.0 times in total, preparing a biaxially stretched polyamide film b having a thickness of 15 µm.

### Non-stretched polyamide film c

The pellets in each of Examples 1 to 7 and Comparative Examples 1 to 4 were fed to a single-screw extruder having a T-die (25 mmϕ Ex T-die film forming machine, manufactured by GM ENGINEERING Co., Ltd.), preparing a non-stretched polyamide film c having a thickness of 40 µm.

### Non-stretched polyamide film d

Using the pellets in each of Examples 1 to 7 and Comparative Examples 1 to 4, and using a 40 mmϕ Ex T-die film forming machine, manufactured by Research Laboratory of Plastics Technology Co., Ltd., a non-stretched polyamide film d having a thickness of 30 µm was prepared. The non-stretched polyamide film d having a thickness of 30 µm was used as a film for flexing test.

### [Table 1]

**Table 1**

| **Raw materials** | **Example 1** | **Example 2** | **Example 3** | **Example 4** | **Example 5** | **Example 6** | **Example 7** | **Comparative Example 1** | **Comparative Example 2** | **Comparative Example 3** | **Comparative Example 4** |
|---|---|---|---|---|---|---|---|---|---|---|---|
| **(A-1) Polyamide 6 (relative viscosity: 3.4)** | **97.2** | **97.2** | **97.1** | **-** | **97.7** | **95.3** | **98.0** | **97.1** | **97.1** | **97.6** | **97.1** |
| **(A-2) Polyamide 6 (relative viscosity: 4.1)** | **-** | **-** | **-** | **97.1** | **-** | **-** | **-** | **-** | **-** | **-** | **-** |
| **(B-1) Maleic anhydride-modified elhylene/butene copolymer (MFR: 40 g/10 minutes)** | **0.5** | **0.5** | **0.9** | **0.9** | **0.3** | **1.8** | **0.6** | **-** | **1.8** | **0.9** | **-** |
| **(B' -1) Maleic anhydride-modified ethylene/butene copolymer (MFR: 0.9 g/10 minutes)** | **-** | **-** | **-** | **-** | **-** | **-** | **-** | **-** | **-** | **-** | **0.9** |
| **(C-1) Ethylene/butene copolymer** | **1.5** | **1.6** | **0.9** | **0.9** | **0.9** | **1.8** | **0.6** | **1.8** | **-** | **0.9** | **0.9** |
| **(D-1) Partial zinc salt of athylene/methacrylic acid copolymer** | **0.3** | **0.2** | **0.5** | **0.5** | **0.5** | **0.5** | **0.2** | **0.5** | **0.5** | **-** | **0.5** |
| **Anti-blocking agent/Silica** | **0.2** | **0.2** | **0.2** | **0.2** | **0.2** | **0.2** | **0.2** | **0.2** | **0.2** | **0.2** | **0.2** |
| **Hindered phenolic antioxidant** | **0.1** | **0.1** | **0.2** | **0.2** | **0.2** | **0.2** | **0.2** | **0.2** | **0.2** | **0.2** | **0.2** |
| **Phosphorus antioxidant** | **0.1** | **0.1** | **0.1** | **0.1** | **0.1** | **0.1** | **0.1** | **0.1** | **0.1** | **0.1** | **0.1** |
| **Lubricant/Ethyleneblsstearamlde** | **0.1** | **0.1** | **0.1** | **0.1** | **0.1** | **0.1** | **0.1** | **0.1** | **0.1** | **0.1** | **0.1** |
| **Total** | **100.0** | **100.0** | **100.0** | **100.0** | **100.0** | **100.0** | **100.0** | **100.0** | **100.0** | **100.0** | **100.0** |
| **Mass ratio (C/B) of component (C) to component (B)** | **3.0** | **3.2** | **1.0** | **1.0** | **3.0** | **1.0** | **1.0** | **-** | **-** | **1.0** | **1.0** |
| **Mass ratio (C/D) of component (C) to component (D)** | **5.0** | **8.0** | **1.8** | **1.8** | **1.8** | **3.6** | **3.0** | **3.6** | **-** | **-** | **1.8** |

### [Evaluation]

With respect to each of the polyamide films prepared in Examples 1 to 7 and Comparative Examples 1 to 4, the following properties were evaluated. The results of the evaluation are shown in Table 2.

### 1. Tensile test

With respect to non-stretched polyamide film a and biaxially stretched polyamide film b obtained from the pellets in Examples 1 to 7 and Comparative Examples 1 to 4, a test specimen was prepared in accordance with ISO 527-1,2, and a tensile test was conducted at a rate of pulling of 300 mm/minute. With respect to the test specimens for MD direction and TD direction, a stress at yield, a stress at break, an elongation at break, and a modulus were measured. The acceptable criteria of the stress at yield, stress at break, elongation at break, and modulus of non-stretched polyamide film a were, respectively, 35 MPa or less, 87 to 110 MPa, 440 to 520%, and 680 to 780 MPa. The acceptable criteria of the stress at yield, stress at break, elongation at break, and modulus of biaxially stretched polyamide film b were, respectively, 230 MPa or less, 175 to 230 MPa, 65 to 100%, and 1,800 to 2,150 MPa. When both the test specimens for MD direction and TD direction satisfy the acceptable criteria, such a polyamide film was judged to have excellent physical properties, and, when only any one of the test specimens for MD direction and TD direction satisfies the acceptable criteria, such a polyamide film was judged to have physical properties at a practically usable level.

### 2. Pinhole resistance in a low temperature environment

With respect to non-stretched polyamide film d and biaxially stretched polyamide film b obtained from the pellets in Examples 1 to 7 and Comparative Examples 1 to 4, using Gelvo type Flex-Cracking Tester equipped with a thermostatic chamber, manufactured by Tester Sangyo Co., Ltd., a 1,000-time flexing test was conducted at 5°C in accordance with MIL-B-131C. The film obtained after the flexing test was placed on a recording paper, and then an India ink was applied to the film to cause the ink to penetrate the recording paper, and the number of the recorded black spots was measured. The pinhole resistance was evaluated in accordance with the following criteria.

In the case of non-stretched polyamide film d:
⊚: The number of black spots is less than 80/0.04 m².
∘: The number of black spots is 80 to less than 95/0.04 m².
×: The number of black spots is 95 or more/0.04 m².

In the case of biaxially stretched polyamide film b:
⊚: The number of black spots is 0/0.04 m².
○: The number of black spots is 1 to 2/0.04 m².
×: The number of black spots is 3 or more/0.04 m².

### 3. Haze (Haze ratio)

With respect to non-stretched polyamide film a and biaxially stretched polyamide film b, a haze (a haze ratio) was measured using Haze Meter, manufactured by Nippon Denshoku Industries Co., Ltd., in accordance with ASTM D-1003. With respect to non-stretched polyamide film a, a film having a haze of 10% or less was judged to have excellent transparency, and, with respect to biaxially stretched polyamide film b, a film having a haze of 15% or less was judged to have excellent transparency.

### 4. Glossiness (gloss value)

With respect to non-stretched polyamide film a and biaxially stretched polyamide film b, a glossiness (a gloss value) was measured using a digital variable angle glossmeter, manufactured by Suga Test Instruments Co., Ltd., in accordance with ASTM D-523. With respect to non-stretched polyamide film a, a film having a gloss value of 120% or more was judged to have excellent glossiness, and, with respect to biaxially stretched polyamide film b, a film having a gloss value of 100% or more was judged to have excellent glossiness.

### 5. Puncture test

With respect to non-stretched polyamide film a and biaxially stretched polyamide film b, a maximum load and an elongation were measured using a needle having a 1.0ϕ diameter and a 0.5R tip shape in accordance with JAS (P-1019).

The acceptable criteria of the maximum load and elongation of non-stretched polyamide film a were 8.0 N or more and 8.0 mm or more, respectively. The acceptable criteria of the maximum load and elongation of biaxially stretched polyamide film b were 11 N or more and 6.0 mm or more, respectively.

### 6. Number of film gels generated

With respect to non-stretched polyamide film c obtained from the pellets in Examples 1 to 7 and Comparative Examples 1 to 4, the number of film gels generated was measured. With respect to non-stretched polyamide film c, the number of film gels generated (number of film gels/0.04 m²) was evaluated by on-line measuring, using a fish-eye counter, manufactured by FUTEC INC., wherein there were counted the number of film gels having a diameter of 50 to 99 µm per 0.04 m², the number of film gels having a diameter of 100 to 199 µm per 0.04 m², and the number of film gels having a diameter of 200 µm or more per 0.04 m². The value of the number of film gels generated shown in Table 2 is an average of the values obtained from the measurement conducted 50 times.

### [Table 2]

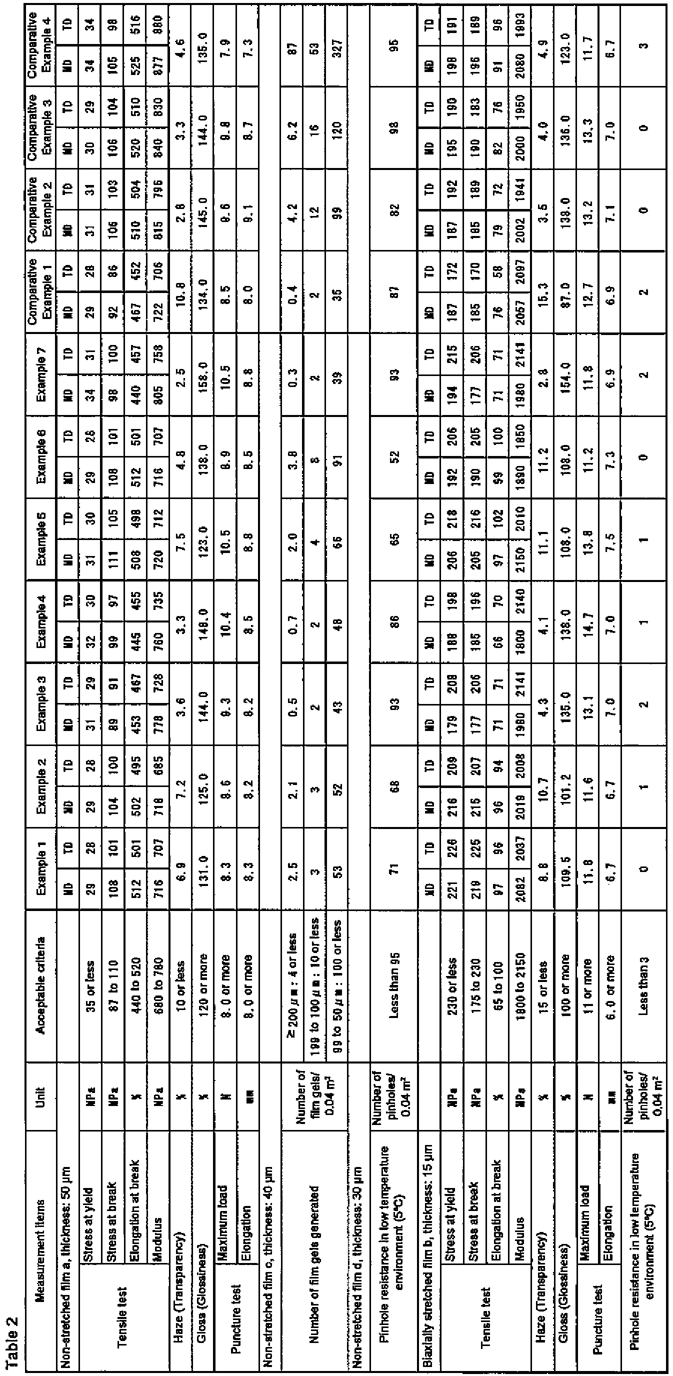

From Table 2, it is apparent that, with respect to the polyamide films in Examples 1 to 7, which use the polyamide resin composition comprising the polyamide resin (A) in an amount of 90.0 to 98.0% by mass, the functional group-containing copolymer polyolefin resin (B) in an amount of 0.1 to 2.0% by mass, the functional group-non-containing copolymer polyolefin resin (C) in an amount of 0.1 to 2.0% by mass, the ethylene/(meth)acrylic acid copolymer metal salt (D) in an amount of 0.1 to 2.0% by mass, and the additional component (E) in an amount of 4.0% by mass or less, based on 100 mass% of the polyamide resin composition, wherein the functional group-containing copolymer polyolefin resin (B) has an MFR of 10 to 50 g/10 minutes, as measured at a temperature of 190°C and under a load of 2.16 kg in accordance with ASTM D1238, the polyamide films have excellent pinhole resistance in a low temperature environment and excellent transparency with few film gels as well as excellent appearance of the film.

In Comparative Example 1 which has no functional group-containing copolymer polyolefin resin (B) incorporated, the haze of the film was high and the transparency of the film was poor. In Comparative Example 2 which has no functional group-non-containing copolymer polyolefin resin (C) incorporated and Comparative Example 3 which has no ethylene/(meth)acrylic acid copolymer metal salt (D) incorporated, a large amount of film gels were generated and thus the appearance was poor. In Comparative Example 4 which has incorporated, instead of the component (B) in the present invention, the functional group-containing copolymer polyolefin resin having an MFR of 0.9 g/10 minutes, as measured at 190°C and under a load of 2.16 kg, both the pinhole resistance in a low temperature environment and suppression of generation of film gels were poor.

### Industrial Applicability

The polyamide resin composition of the present invention is advantageous in that a polyamide film can be formed from the composition wherein the polyamide film maintains various properties, such as gas barrier properties, toughness, pinhole resistance, heat resistance, and transparency, and further does not have poor appearance due to a film gel and has excellent transparency and excellent pinhole resistance in a low temperature environment. A film obtained from the polyamide resin composition of the present invention is advantageously used particularly in the food packaging application.

## Claims

1. A polyamide resin composition comprising a polyamide resin (A) in an amount of 90.0 to 98.0% by mass, a functional group-containing copolymer polyolefin resin (B) in an amount of 0.1 to 2.0% by mass, a functional group-non-containing copolymer polyolefin resin (C) in an amount of 0.1 to 2.0% by mass, an ethylene/(meth)acrylic acid copolymer metal salt (D) in an amount of 0.1 to 2.0% by mass, and an additional component (E) in an amount of 4.0% by mass or less, based on 100 mass% of the polyamide resin composition,
wherein the functional group-containing copolymer polyolefin resin (B) has an MFR of 10 to 50 g/10 minutes, as measured at a temperature of 190°C and under a load of 2.16 kg in accordance with ASTM D1238.

2. The polyamide resin composition according to claim 1, wherein the polyamide resin (A) is selected from the group consisting of polyamide 6, polyamide 56, polyamide 510, polyamide 512, polyamide 610, polyamide 612, polyamide 1010, polyamide 1012, polyamide 6/66, polyamide 6/12, and polyamide 6/66/12.

3. The polyamide resin composition according to claim 1 or 2, wherein the functional group-containing copolymer polyolefin resin (B) is an ethylene/α-olefin copolymer having bonded thereto a group derived from maleic anhydride.

4. The polyamide resin composition according to claim 1 or 2, wherein the functional group-non-containing copolymer polyolefin resin (C) is an ethylene/α-olefin copolymer, wherein the α-olefin of the ethylene/α-olefin copolymer is at least one member selected from the group consisting of propylene, 1-butene, 1-hexene, and 1-octene.

5. The polyamide resin composition according to claim 1 or 2, wherein the functional group-non-containing copolymer polyolefin resin (C) is an ethylene/1-butene copolymer.

6. The polyamide resin composition according to claim 1 or 2, wherein the metal used in the ethylene/(meth)acrylic acid copolymer metal salt (D) is at least one member selected from the group consisting of Na, K, Cu, Mg, Ca, Ba, Zn, Cd, Al, Fe, Co, and Ni.

7. The polyamide resin composition according to claim 1 or 2, wherein the ethylene/(meth)acrylic acid copolymer metal salt (D) is a partial zinc salt of the ethylene/(meth)acrylic acid copolymer.

8. The polyamide resin composition according to claim 1 or 2, wherein the mass ratio (C/B) of the functional group-non-containing copolymer polyolefin resin (C) to the functional group-containing copolymer polyolefin resin (B) is 0.9 to 3.2.

9. The polyamide resin composition according to claim 1 or 2, wherein the mass ratio (C/D) of the functional group-non-containing copolymer polyolefin resin (C) to the ethylene/(meth)acrylic acid copolymer metal salt (D) is 1.7 to 8.0.

10. The polyamide resin composition according to claim 1 or 2, wherein the additional component (E) comprises an anti-blocking agent, wherein the amount of the anti-blocking agent contained is 0.01 to 1.0% by mass, based on 100 mass% of the polyamide resin composition.

11. The polyamide resin composition according to claim 1 or 2, wherein the additional component (E) comprises at least one antioxidant selected from the group consisting of a phenolic compound, a phosphorus compound, and a sulfur compound, wherein the amount of the antioxidant contained is 0.01 to 1.0% by mass, based on 100 mass% of the polyamide resin composition.

12. The polyamide resin composition according to claim 1 or 2, wherein the additional component (E) comprises a lubricant, wherein the amount of the lubricant contained is 0.01 to 1.0% by mass, based on 100 mass% of the polyamide resin composition.

13. A polyamide film comprising the polyamide resin composition according to claim 1 or 2.

14. The polyamide film according to claim 13, which is a stretched film.

15. A film laminate comprising the polyamide film according to claim 13.

16. The film laminate according to claim 15, which is for use in food packaging.
